# EUROPÄISCHE PATENTSCHRIFT

(11) **EP 3 656 031 B1**
(45) Veröffentlichungstag und Bekanntmachung des Hinweises auf die Patenterteilung: **17.11.2021**
(21) Anmeldenummer: 17771679.2
(22) Anmeldetag: 30.08.2017
(51) Int. Cl.: H02J 3/14, H02J 3/32

(54) **ANORDNUNG ZUR FREQUENZSTABILISIERUNG**
FREQUENCY STABILIZATION ARRANGEMENT
DISPOSITIF DE STABILISATION DE FRÉQUENCE

(43) Veröffentlichungstag der Anmeldung: 27.05.2020
(73) Patentinhaber: Siemens Energy Global GmbH & Co. KG, 81739 München (DE)
(72) Erfinder: ARMSCHAT, Christoph, 91058 Erlangen (DE); MÜLLER, Holger, 91096 Möhrendorf (DE); SPAHIC, Ervin, 91052 Erlangen (DE)
(86) Internationale Anmeldenummer: PCT/EP2017/071795
(87) Internationale Veröffentlichungsnummer: WO 2019/042545

(56) Entgegenhaltungen:
- EP-A1- 3 200 302
- WO-A1-2014/000770
- DE-A1-102008 024 222

## Beschreibung

Die Erfindung betrifft eine Anordnung und ein Verfahren zur Frequenzstabilisierung eines Energieübertragungsnetzes.

In Energieübertragungsnetzen bekommt die Sicherstellung einer konstanten Frequenz eine immer größere Bedeutung. Ein Grund dafür ist, dass zunehmend dezentrale Stromerzeuger (insbesondere Windenergieanlagen und Fotovoltaikanlagen) über leistungselektronische Betriebsmittel an die Energieübertragungsnetze angeschlossen sind. Dabei stehen keine rotierenden Massen mehr zur Verfügung, wie sie bei klassischen Generatoren zur Verfügung stehen. Im Falle eines Fehlers (z. B. bei Ausfall eines großen Energieerzeugers oder eines großen Energieverbrauchers oder im Falle einer ungewollten Netztrennung) kann sich daher die Frequenz im Energieübertragungsnetz sehr schnell in Richtung zu kleiner Frequenzwerte oder in Richtung zu großer Frequenzwerte verändern und dadurch die Netzsicherheit gefährden. Früher wurden solche Frequenzabweichungen durch die rotierenden Massen konventioneller Stromerzeuger (Inertia, Trägheit) verlangsamt sowie bezüglich ihrer Extremwerte (Maximal- und Minimalwerte) begrenzt.

Aus der europäischen Patentanmeldung EP 3 200 302 A1 ist ein Gebäudeenergiesystem bekannt, bei dem ein Netzanschlusspunkt eines externen Stromnetzes mit Verbrauchern verbunden ist. Außerdem ist ein Akkumulator über einen Wechselrichter an den Netzanschlusspunkt angeschlossen.

Die Offenlegungsschrift DE 10 2008 024 222 A1 offenbart ein Verfahren und eine Vorrichtung zur Bereitstellung von Regelleistung im Energieversorgungsbereich zur Frequenzstabilisierung eines elektrischen Netzes. Dabei werden bei der Nachfrage von positiver Regelleistung im Übertragungsnetz unterbrechungsfreie Stromversorgungsanlagen und/oder Gleichrichtersysteme vom Übertragungsnetz getrennt und bei der Nachfrage von negativer Regelleistung eine oder mehrere variable Lasten zugeschaltet.

Der Erfindung liegt die Aufgabe zugrunde, eine Anordnung und ein Verfahren anzugeben, mit denen die Frequenz eines Energieübertragungsnetzes stabilisiert werden kann.

Diese Aufgabe wird erfindungsgemäß gelöst durch eine Anordnung und durch ein Verfahren nach den unabhängigen Patentansprüchen. Vorteilhafte Ausführungsformen der Anordnung sind in den abhängigen Patentansprüchen angegeben.

Offenbart wird eine Anordnung zur Frequenzstabilisierung eines Energieübertragungsnetzes mit einem modularen Multilevelstromrichter, der einen ersten Anschluss (Stromrichteranschluss) zum elektrischen Verbinden mit einem Energieübertragungsnetz aufweist, und mit einer elektrischen Widerstandseinheit (Hochleistungswiderstandseinheit), die einen zweiten Anschluss (Einheitenanschluss) zum elektrischen Verbinden mit dem Energieübertragungsnetz aufweist. Diese Anordnung erlaubt es vorteilhafterweise, mittels des Multilevelstromrichters elektrische Energie in das Energieübertragungsnetz einzuspeisen (und damit bei Bedarf die Frequenz des Energieübertragungsnetzes zu stützen, d. h. zu vergrößern) oder mittels der elektrischen Widerstandseinheit elektrische Energie aus dem Energieübertragungsnetz zu entnehmen und damit bei Bedarf die Frequenz des Energieübertragungsnetzes zu verringern. Bei einer ungewollten Frequenzverringerung im Energieübertragungsnetz wird also der modulare Multilevelstromrichter aktiviert, um einen Wechselstrom entsprechender Frequenz in das Energieübertragungsnetz einzuspeisen und damit die Frequenz zu stützen. Bei einer ungewollten Frequenzvergrößerung im Energieübertragungsnetz wird die elektrische Widerstandseinheit aktiviert, um elektrische Energie aus dem Energieübertragungsnetz zu entnehmen und damit die Frequenz des Energieübertragungsnetzes zu senken.

Die Anordnung ist so ausgestaltet, dass die Widerstandseinheit mit einer Schalteinrichtung verbunden ist, die ein schaltbares elektrisches Verbinden der Widerstandseinheit mit dem Energieübertragungsnetz ermöglicht. Dabei verbindet die Schalteinrichtung den zweiten Anschluss der Widerstandseinheit mit dem Energieübertragungsnetz. Die Schalteinrichtung erlaubt es vorteilhafterweise, die Widerstandseinheit nur bei Bedarf zu aktivieren, d.h. einen Stromfluss vom Energieübertragungsnetz zu der Widerstandseinheit zu ermöglichen. Insbesondere erlaubt es die Schalteinrichtung, die Widerstandseinheit nur bei einer zu hohen Frequenz des Energieübertragungsnetzes zu aktivieren.

Die Anordnung kann auch so ausgestaltet sein, dass der Multilevelstromrichter eine Mehrzahl von Modulen aufweist, die jeweils mindestens zwei elektronische Schaltelemente und einen elektrischen Kondensator aufweisen. Derartige Module eines modularen Multilevelstromrichters werden auch als Submodule bezeichnet. Mittels dieser Module ist der Multilevelstromrichter in der Lage, nahezu beliebige Ausgangsspannungen an dem ersten Anschluss zu erzeugen.

Die Anordnung kann auch so ausgestaltet sein, dass die zwei elektronischen Schaltelemente der Module in einer Halbbrückenschaltung angeordnet sind, oder die Module jeweils die zwei elektronischen Schaltelemente und zwei weitere elektronische Schaltelemente aufweisen, wobei die zwei elektronischen Schaltelemente und die zwei weiteren elektronischen Schaltelemente in einer Vollbrückenschaltung angeordnet sind. Diese Module werden auch als Halbbrücken-Module oder Halbbrücken-Submodule bzw. als Vollbrücken-Module oder Vollbrücken-Submodule bezeichnet.

Die Anordnung ist so ausgestaltet, dass der modulare Multilevelstromrichter (gleichspannungsseitig) mit einem (zentralen) Energiespeicher verbunden ist. Die in diesem Energiespeicher gespeicherte elektrische Energie kann im Falle einer unerwünschten zu niedrigen Frequenz des Energieübertragungsnetzes mittels des Multilevelstromrichters in das Energieübertragungsnetz eingespeist werden. Dadurch kann die Frequenz des Energieübertragungsnetzes erhöht werden. Im Unterschied zu den dezentralen (verteilten) Kondensatoren der Module ist in der Anordnung der mit dem Multilevelstromrichter gleichspannungsseitig verbundene Energiespeicher zentral ausgeführt, d.h. bei Frequenzunterschreitung werden alle Module des Multilevelstromrichters von dem zentralen Energiespeicher versorgt. Dieser Energiespeicher weist eine höhere elektrische Speicherkapazität auf als die einzelnen Kondensatoren der Module. Der Energiespeicher weist außerdem eine höhere elektrische Spannung auf als die einzelnen Kondensatoren der Module.

Die Anordnung kann auch so ausgestaltet sein, dass der (zentrale) Energiespeicher eine Mehrzahl von miteinander verbundenen Energiespeichereinheiten aufweist. Mittels eines derartig aufgebauten Energiespeichers können vorteilhafterweise relativ große Energiemengen gespeichert werden, so dass mittels der Anordnung die Frequenz des Energieübertragungsnetzes während eines relativ langen Zeitraums gestützt werden kann.

Die Anordnung kann so ausgestaltet sein, dass die Energiespeichereinheiten Kondensatoren und/oder Batterien sind.

Offenbart wird weiterhin ein Verfahren zur Frequenzstabilisierung eines Energieübertragungsnetzes, wobei das Energieübertragungsnetz mit einem modularen Multilevelstromrichter verbunden ist, der (gleichspannungsseitig) mit einem Energiespeicher verbunden ist, und wobei das Energieübertragungsnetz über eine Schalteinrichtung mit einer elektrischen Widerstandseinheit (insbesondere einer Hochleistungswiderstandseinheit) verbunden ist, wobei bei dem Verfahren
- die Frequenz eines über das Energieübertragungsnetz übertragenen Wechselstroms ermittelt wird,
- wenn die zeitliche Änderung der Frequenz einen ersten Grenzwert unterschreitet, von dem Multilevelstromrichter elektrische Energie aus einem Energiespeicher entnommen und (mittels eines die Sollfrequenz aufweisendem Einspeise-Wechselstroms) in das Energieübertragungsnetz eingespeist wird, (so dass die Frequenz des Wechselstroms des Energieübertragungsnetzes steigt) und
- wenn die zeitliche Änderung der Frequenz einen zweiten Grenzwert überschreitet, die Schalteinrichtung geschlossen wird, wodurch elektrische Energie von dem Energieübertragungsnetz zu der Widerstandseinheit übertragen und dort in Wärme umgewandelt wird (so dass die Frequenz des Wechselstroms des Energieübertragungsnetzes fällt).

Das Verfahren weist gleichartige Vorteile auf, wie sie oben im Zusammenhang mit der Anordnung angegeben sind.

Im Folgenden wird die Erfindung anhand von Ausführungsbeispielen näher erläutert. Gleiche Bezugszeichen verweisen dabei auf gleiche oder gleichwirkende Elemente. Dazu ist in
- Figur 1: ein Ausführungsbeispiel einer Anordnung zur Frequenzstabilisierung mit einem modularen Multilevelstromrichter und einer Widerstandseinheit, in
- Figur 2: ein Ausführungsbeispiel des modularen Multilevelstromrichters mit einem angeschlossenen Energiespeicher, in
- Figur 3: ein Ausführungsbeispiel eines Moduls des Multilevelstromrichters, in
- Figur 4: ein weiteres Ausführungsbeispiel eines Moduls des Multilevelstromrichters, in
- Figur 5: ein Ausführungsbeispiel des Energiespeichers, in
- Figur 6: eine beispielhafte Darstellung eines Verfahrensablaufs zur Frequenzstabilisierung eines Energieübertragungsnetzes und in
- Figur 7: eine beispielhafte Darstellung eines weiteren Verfahrensablaufs zur Frequenzstabilisierung eines Energieübertragungsnetzes
dargestellt.

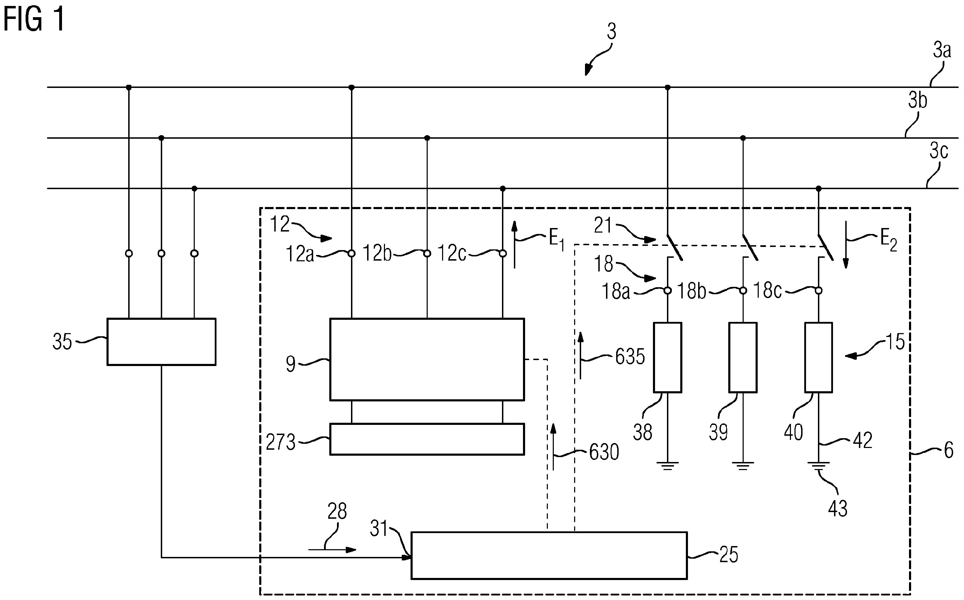

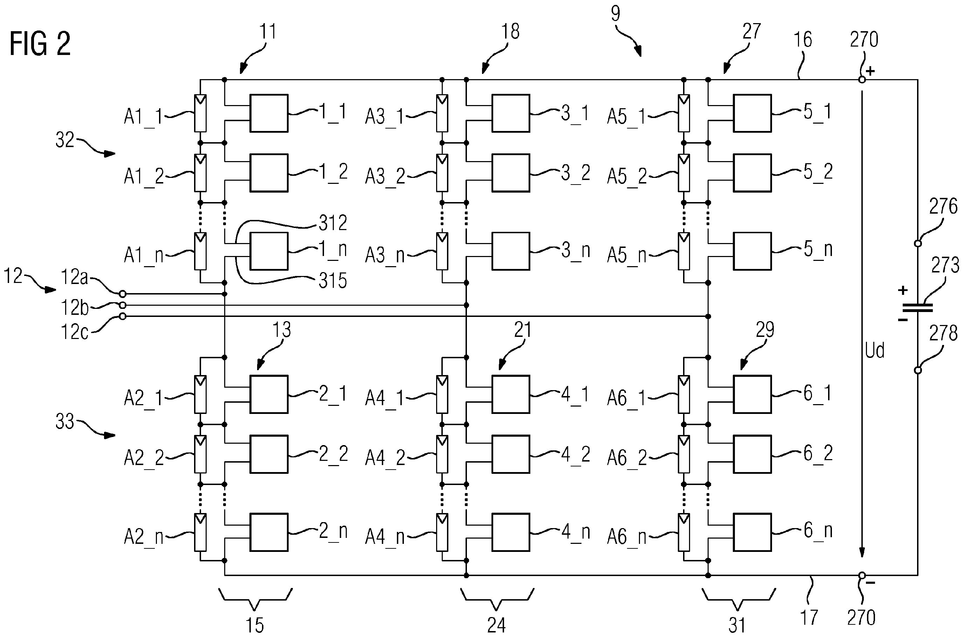

In Figur 1 ist ein Ausführungsbeispiel mit einem dreiphasigen Energieübertragungsnetz 3 mit drei Phasenleitern 3a, 3b und 3c dargestellt. An das Energieübertragungsnetz 3 ist eine Anordnung 6 zur Frequenzstabilisierung dieses Energieübertragungsnetzes angeschlossen. Die Anordnung 6 weist einen modularen Multilevelstromrichter 9 auf. Der modulare Multilevelstromrichter 9 weist einen ersten Anschluss 12 (Stromrichteranschluss 12) auf, der mit den Phasenleitern 3a, 3b und 3c des Energieübertragungsnetzes 3 verbunden ist. Der modulare Multilevelstromrichter 9 ist mit einem Energiespeicher 273 verbunden, vgl. auch Figur 2.

Weiterhin weist die Anordnung 6 eine Widerstandseinheit 15 auf. Ein Anschluss 18 (Einheitenanschluss 18) der Widerstandseinheit 15 (der im Folgenden auch als zweiter Anschluss 18 bezeichnet wird) ist über eine Schalteinrichtung 21 mit den Phasenleitern 3a, 3b und 3c des Energieübertragungsnetzes 3 verbunden. Dabei sind der Multilevelstromrichter 9 und die Widerstandseinheit 15 (mittels der Schalteinrichtung 21) parallel an das Energieübertragungsnetz 3 angeschlossen. Deshalb kann entweder der Multilevelstromrichter 9 Energie in das Energieübertragungsnetz 3 einspeisen oder die Widerstandseinheit 15 kann Energie aus dem Energieübertragungsnetz 3 herausleiten.

Eine Steuereinrichtung 25 der Anordnung 6 steuert sowohl den modularen Multilevelstromrichter 9 als auch die Schalteinrichtung 21 an. Dies ist mittels je einer strichlierten Linie angedeutet. Die Steuereinrichtung 25 wird mit einem Messwert 28 der Frequenz des Energieübertragungsnetzes 3 beaufschlagt. Dieser Messwert 28 (bzw. Frequenz-Istwert 28) liegt an einem Eingang 31 der Steuereinrichtung 25 an. Der Frequenzmesswert 28 wird im Ausführungsbeispiel erzeugt von einer Frequenzmesseinrichtung 35, welche die Frequenz des Energieübertragungsnetzes (genauer gesagt die Frequenz des in dem Energieübertragungsnetz übertragenen Wechselstroms) misst. Dazu ist die Frequenzmesseinrichtung 35 mit den Phasenleitern 3a, 3b und 3c des Energieübertragungsnetzes 3 verbunden. Die Frequenzmesseinrichtung 35 kann Teil der Anordnung 6 sein. Die Frequenzmesseinrichtung 35 kann aber auch außerhalb der Anordnung 6 angeordnet sein und lediglich der Frequenzmesswert 28 kann zu der Anordnung 6 übertragen werden. Der zuletzt genannte Fall ist in der Figur 1 dargestellt. Frequenzmesseinrichtungen 35 sind als solche bekannt und brauchen daher hier nicht näher erläutert zu werden.

Die Widerstandseinheit 15 kann insbesondere eine Hochleistungswiderstandseinheit sein. Mittels dieser Widerstandseinheit 15 können große elektrische Energien in Wärmeenergie umgewandelt werden. Im Ausführungsbeispiel weist die Widerstandseinheit 15 drei Widerstandselemente 38, 39 und 40 auf. Dabei ist jedes der drei Widerstandselemente einem Phasenleiter des Energieübertragungsnetzes 3 zugeordnet. So ist das erste Widerstandselement 38 dem ersten Phasenleiter 3a zugeordnet, das zweite Widerstandselement 39 ist dem zweiten Phasenleiter 3b zugeordnet und das dritte Widerstandselement 40 dem dritten Phasenleiter 3c. Im Ausführungsbeispiel der Figur 1 ist ein Anschluss des Widerstandselements jeweils über die Schalteinrichtung 21 mit dem Phasenleiter verbunden. Der andere Anschluss des Widerstandselements ist elektrisch (insbesondere über eine Erdelektrode 42) mit Erdpotential 43 verbunden. So ist ein erster Anschluss 18a des ersten Widerstandselements 38 über die Schalteinrichtung 21 mit dem ersten Phasenleiter 3a verbunden; der zweite Anschluss des ersten Widerstandselements 38 ist mit Erdpotential verbunden. In gleicher Art und Weise ist auch ein erster Anschluss 18b des zweiten Widerstandselements 39 über die Schalteinrichtung 21 mit dem zweiten Phasenleiter 3b verbunden; und ein erster Anschluss 18c des dritten Widerstandselements 40 ist über die Schalteinrichtung 21 mit dem dritten Phasenleiter 3c verbunden.

Die Widerstandseinheit 15 kann aber auch anders ausgestaltet sein: Beispielsweise können die drei Widerstandselemente 38, 39 und 40 auch über eine gemeinsame Erdelektrode mit Erdpotential verbunden sein. In einem weiteren Ausführungsbeispiel können die drei Widerstandselemente 38, 39 und 40 in Sternschaltung angeordnet sein und der Sternpunkt kann über eine Erdelektrode mit Erdpotential 43 verbunden sein. In wieder einem weiteren Ausführungsbeispiel können die drei Widerstandselemente 38, 39 und 40 in einer Dreiecksschaltung angeordnet sein; in diesem Fall ist keine Verbindung zum Erdpotential notwendig.

In Figur 2 ist ein Ausführungsbeispiel des modularen Multilevelstromrichters 9 dargestellt. Der Multilevelstromrichter 9 weist den ersten Anschluss 12 zum Anschluss an die Phasenleiter des Energieübertragungsnetzes 3 auf. Dabei weist der erste Anschluss 12 einen ersten Wechselspannungsanschluss 12a, einen zweiten Wechselspannungsanschluss 12b und einen dritten Wechselspannungsanschluss 12c auf.

Der erste Wechselspannungsanschluss 12a ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Stromrichters 9. Das dem ersten Wechselspannungsanschluss 12a abgewandte Ende des ersten Phasenmodulzweigs 11 ist mit einem ersten Gleichspannungsanschluss 16 elektrisch verbunden; das dem ersten Wechselspannungsanschluss 12a abgewandte Ende des zweiten Phasenmodulzweigs 13 ist mit einem zweiten Gleichspannungsanschluss 17 elektrisch verbunden. Der erste Gleichspannungsanschluss 16 ist ein positiver Gleichspannungsanschluss; der zweite Gleichspannungsanschluss 17 ist ein negativer Gleichspannungsanschluss. Zwischen dem ersten Gleichspannungsanschluss 16 und dem zweiten Gleichspannungsanschluss 17 liegt eine Gleichspannung Ud an.

Der zweite Wechselspannungsanschluss 12b ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluss 12c ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 12b abgewandte Ende des dritten Phasenmodulzweigs 18 und das dem dritten Wechselspannungsanschluss 12c abgewandte Ende des fünften Phasenmodulzweigs 27 sind mit dem ersten Gleichspannungsanschluss 16 elektrisch verbunden. Das dem zweiten Wechselspannungsanschluss 12b abgewandte Ende des vierten Phasenmodulzweigs 21 und das dem dritten Wechselspannungsanschluss 12c abgewandte Ende des sechsten Phasenmodulzweigs 29 sind mit dem zweiten Gleichspannungsanschluss 17 elektrisch verbunden. Der erste Phasenmodulzweig 11, der dritte Phasenmodulzweig 18 und der fünfte Phasenmodulzweig 27 bilden ein positivseitiges Stromrichterteil 32; der zweite Phasenmodulzweig 13, der vierte Phasenmodulzweig 21 und der sechste Phasenmodulzweig 29 bilden ein negativseitiges Stromrichterteil 33.

Jeder Phasenmodulzweig weist eine Mehrzahl von Modulen (1_1, 1_2, 1_3, ... 1_n; 2_1 ... 2_n; usw.) auf, welche (mittels ihrer galvanischen Stromanschlüsse) elektrisch in Reihe geschaltet sind. Solche Module werden auch als Submodule bezeichnet. Im Ausführungsbeispiel der Figur 1 weist jeder Phasenmodulzweig n Module auf. Die Anzahl der elektrisch in Reihe geschalteten Module kann sehr verschieden sein, mindestens sind zwei Module in Reihe geschaltet, es können aber auch beispielsweise 3, 50, 100 oder mehr Module elektrisch in Reihe geschaltet sein. Im Ausführungsbeispiel ist n = 36: der erste Phasenmodulzweig 11 weist also 36 Module 1_1, 1_2, 1_3, ... 1_36 auf. Die anderen Phasenmodulzweige 13, 18, 21, 27 und 29 sind gleichartig aufgebaut.

Von der Steuereinrichtung 25 des Stromrichters 9 werden optische Nachrichten bzw. optische Signale über eine optische Kommunikationsverbindung (zum Beispiel über einen Lichtwellenleiter) zu den einzelnen Modulen 1_1 bis 6_n übertragen. Beispielsweise sendet die Steuereinrichtung an die einzelnen Module jeweils einen Sollwert zur Höhe der Ausgangsspannung, die das jeweilige Modul bereitstellen soll.

Diese optischen Nachrichten bzw. optischen Signale bilden das Stromrichter-Ansteuersignal 630, vgl. Figur 1.

Die Module 1_1 bis 6_n sind optional jeweils mit einem Überspannungsableiter A1_1 bis A6_n versehen. Der Überspannungsableiter ist dabei dem jeweiligen Modul parallelgeschaltet. Jeder Überspannungsableiter schützt das ihm zugeordnete Modul vor Überspannung.

Der erste Gleichspannungsanschluss 16 und der zweite Gleichspannungsanschluss 17 bilden einen Energiespeicheranschluss 270 des Multilevelstromrichters 9. An den Energiespeicheranschluss 270 ist ein elektrischer Energiespeicher 273 angeschlossen. Der Energiespeicheranschluss 270 ist ein Gleichspannungsanschluss des modularen Multilevelstromrichters 9. Der Energiespeicher 273 ist also gleichspannungsseitig mit dem modularen Multilevelstromrichter 9 verbunden bzw. an den modularen Multilevelstromrichter 9 angeschlossen.

Der Energiespeicher 273 ist ein unipolarer Energiespeicher, d. h. der Energiespeicher 273 weist einen positiven Energiespeicheranschluss 276 und einen negativen Energiespeicheranschluss 278 auf. Der Energiespeicher 273 stellt dem Multilevelstromrichter 9 die elektrische Energie zur Verfügung. Dadurch kann der Multilevelstromrichter 9 bei Bedarf über den ersten Anschluss 12 elektrische Energie E₁ in das Energieübertragungsnetz 3 einspeisen.

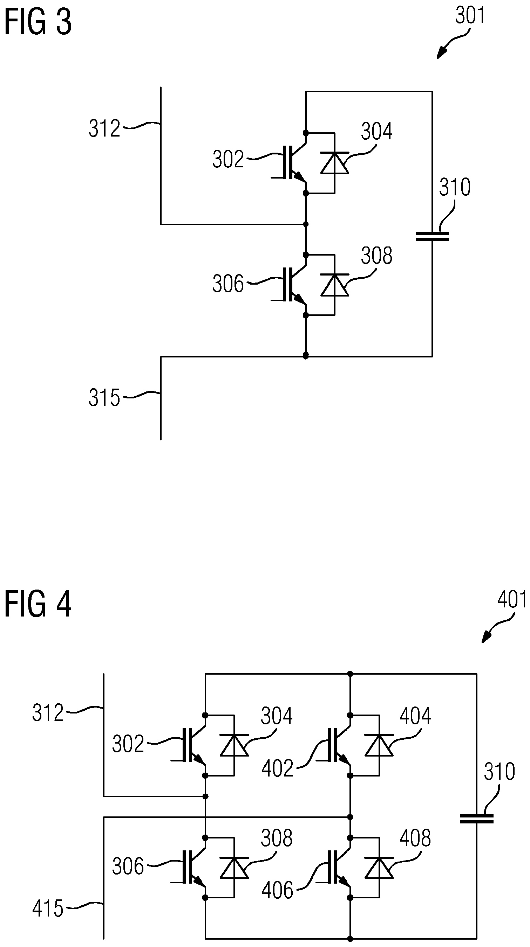

In Figur 3 ist ein Ausführungsbeispiel eines Moduls 301 des modularen Multilevelstromrichters 9 dargestellt. Dabei kann es sich beispielsweise um das Modul 1_1 oder um eines der anderen Module des modularen Multilevelstromrichters 9 handeln.

Das Modul 301 ist als ein Halbbrückenmodul 301 ausgestaltet. Das Modul 301 weist ein erstes ein- und abschaltbares elektronisches Schaltelement 302 (erstes elektronisches Schaltelement 302) mit einer ersten antiparallel geschalteten Diode 304 (erste Freilaufdiode 304) auf. Weiterhin weist das Modul 301 ein zweites ein- und abschaltbares elektronisches Schaltelement 306 (zweites elektronisches Schaltelement 306) mit einer zweiten antiparallel geschalteten Diode 308 (zweite Freilaufdiode 308) und einen elektrischen Kondensator 310 auf. Das erste elektronische Schaltelement 302 und das zweite elektronische Schaltelement 306 sind jeweils als ein IGBT (insulated-gate bipolar transistor) ausgestaltet. Das erste elektronische Schaltelement 302 ist elektrisch in Reihe geschaltet mit dem zweiten elektronischen Schaltelement 306. Am Verbindungspunkt zwischen den beiden elektronischen Schaltelementen 302 und 306 ist ein erster (galvanischer) Modulanschluss 312 angeordnet. An dem Anschluss des zweiten Schaltelements 306, welcher dem Verbindungspunkt gegenüberliegt, ist ein zweiter (galvanischer) Modulanschluss 315 angeordnet. Der zweite Modulanschluss 315 ist weiterhin mit einem ersten Anschluss des Kondensators 310 verbunden; ein zweiter Anschluss des Kondensators 310 ist elektrisch verbunden mit dem Anschluss des ersten Schaltelements 302, der dem Verbindungspunkt gegenüberliegt.

Der Kondensator 310 ist also elektrisch parallel geschaltet zu der Reihenschaltung aus dem ersten Schaltelement 302 und dem zweiten Schaltelement 306. Durch entsprechende Ansteuerung des ersten Schaltelements 302 und des zweiten Schaltelements 306 kann erreicht werden, dass zwischen dem ersten Modulanschluss 312 und dem zweiten Modulanschluss 315 entweder die Spannung des Kondensators 310 ausgegeben wird oder keine Spannung ausgegeben wird (d.h. eine Nullspannung ausgegeben wird). Durch Zusammenwirken der Module der einzelnen Phasenmodulzweige kann so die jeweils gewünschte Ausgangsspannung des Stromrichters erzeugt werden. Die Ansteuerung des ersten Schaltelements 302 und des zweiten Schaltelements 306 erfolgt mittels des von der Steuereinrichtung 25 zu dem Stromrichter 9 übertragenen Stromrichter-Ansteuersignals 630.

In Figur 4 ist ein weiteres Ausführungsbeispiel eines Moduls 401 des modularen Multilevelstromrichters 9 dargestellt. Dabei kann es sich beispielsweise um das Modul 1_1 oder um eines der anderen Module des modularen Multilevelstromrichters 9 handeln.

Neben den bereits aus Figur 3 bekannten ersten elektronischen Schaltelement 302, zweiten elektronischen Schaltelement 306, erster Freilaufdiode 304, zweiter Freilaufdiode 308 und Kondensator 310 weist das in Figur 4 dargestellte Modul 401 ein drittes elektronisches Schaltelement 402 mit einer antiparallel geschalteten dritten Freilaufiode 404 sowie ein viertes elektronischen Schaltelement 406 mit einer vierten antiparallel geschalteten Freilaufdiode 408 auf. Das dritte elektronische Schaltelement 402 und das vierte elektronische Schaltelement 406 sind jeweils als ein IGBT ausgestaltet. Im Unterschied zur Schaltung der Figur 3 ist der zweite Modulanschluss 415 nicht mit dem zweiten elektronischen Schaltelement 306 elektrisch verbunden, sondern mit einem Mittelpunkt einer elektrischen Reihenschaltung aus dem dritten elektronischen Schaltelement 402 und dem vierten elektronischen Schaltelement 406.

Das Modul 401 der Figur 4 ist ein sogenanntes Vollbrücken-Modul 401. Dieses Vollbrücken-Modul 401 zeichnet sich dadurch aus, dass bei entsprechender Ansteuerung der vier elektronischen Schaltelemente zwischen dem ersten Modulanschluss 312 und dem zweiten Modulanschluss 415 wahlweise entweder die positive Spannung des Kondensators 310, die negative Spannung des Kondensators 310 oder eine Spannung des Wertes Null (Nullspannung) ausgegeben werden kann. Somit kann also mittels des Vollbrückenmoduls 401 die Polarität der Ausgangsspannung umgekehrt werden. Der Stromrichter 9 kann entweder nur Halbbrücken-Module 301, nur Vollbrücken-Module 401 oder auch Halbbrücken-Module 301 und Vollbrücken-Module 401 aufweisen.

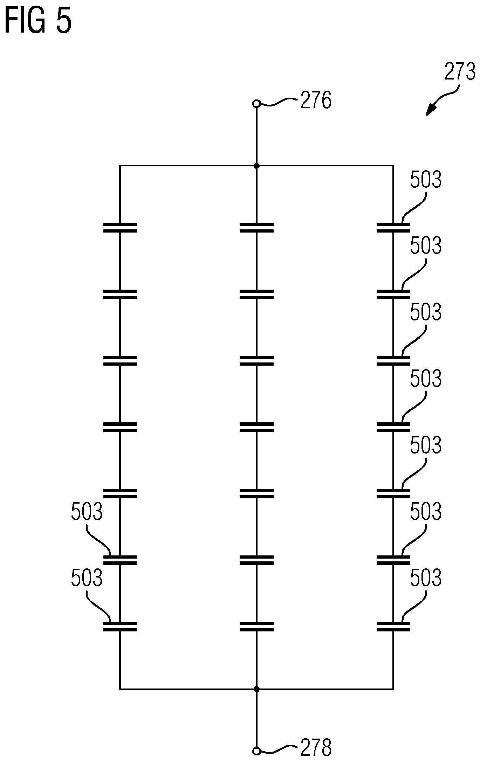

In Figur 5 ist ein Ausführungsbeispiel des Energiespeichers 273 näher dargestellt. Der Energiespeicher 273 weist eine Mehrzahl von miteinander verbundenen Energiespeichereinheiten 503 auf. Im Ausführungsbeispiel sind diese Energiespeichereinheiten 503 elektrisch in Reihe geschaltet unter Bildung von Energiespeichereinheiten-Reihenschaltungen. Drei solcher Energiespeichereinheiten-Reihenschaltungen sind parallelgeschaltet und bilden den Energiespeicher 273. Die schematische Darstellung der Figur 5 ist lediglich beispielhaft zu verstehen. Natürlich können in anderen Energiespeichern andere Anzahlen an Energiespeichereinheiten 503 in Reihe bzw. parallelgeschaltet sein. Durch die Reihenschaltung der Energiespeichereinheiten ist es möglich, mittels des Energiespeichers 273 hohe Spannungen bereitzustellen. Durch die Parallelschaltung der drei Reihenschaltungen ist es möglich, mittels des Energiespeichers 273 große Stromstärken bereitzustellen. Die Energiespeichereinheiten 503 können grundsätzlich beliebige elektrische Energiespeichereinheiten sein, insbesondere Kondensatoren oder Batterien. Als Kondensatoren können insbesondere sogenannte Supercaps eingesetzt werden.

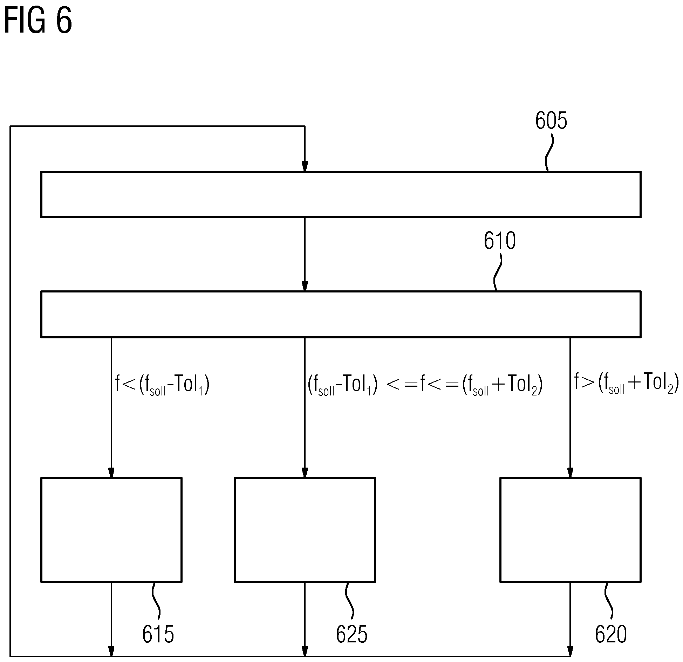

In Figur 6 ist ein beispielhafter Verfahrensablauf zur Frequenzstabilisierung des Energieübertragungsnetzes 3 dargestellt. Im Folgenden wird anhand der Figuren 6 und 1 dieser Verfahrensablauf näher beschrieben.

In einem ersten Verfahrensschritt 605 wird die Frequenz f eines über das Energieübertragungsnetz 3 übertragenen Wechselstroms ermittelt. Diese Ermittlung der Frequenz f erfolgt im Ausführungsbeispiel mittels der Frequenzmesseinrichtung 35, die an das Energieübertragungsnetz 3 angeschlossen ist. Von der Frequenzmesseinrichtung 35 wird der Messwert 28 der ermittelten Frequenz zu der Steuereinrichtung 25 übertragen. In einem zweiten Verfahrensschritt 610 wird in der Steuereinrichtung 25 die ermittelte Frequenz f mit einer vorbekannten Sollfrequenz fₛₒₗₗ verglichen. Wenn die ermittelte Frequenz f die Sollfrequenz fₛₒₗₗ um mehr als einen vorbestimmten Unterschreitungs-Toleranzwert Tol₁ unterschreitet, dann wird der dritte Verfahrensschritt 615 ausgeführt. Wenn die ermittelte Frequenz f die Sollfrequenz fₛₒₗₗ um mehr als einen vorbestimmten Überschreitungs-Toleranzwert Tol₂ überschreitet, dann wird der vierte Verfahrensschritt 620 ausgeführt. Wenn die ermittelte Frequenz f innerhalb eines durch den Unterschreitungs-Toleranzwert Tol₁ und den Überschreitungs-Toleranzwert Tol₂ gebildeten Toleranzbereichs um die Sollfrequenz fₛₒₗₗ liegt, dann wird der fünfte Verfahrensschritt 625 ausgeführt.

Wenn die Frequenz f des Energieübertragungsnetzes zu klein (Unterfrequenz) ist (wenn also die ermittelte Frequenz f kleiner ist als der durch den Unterschreitungs-Toleranzwert Tol₁ bestimmte Toleranzbereich um die Sollfrequenz fₛₒₗₗ, f < (fₛₒₗₗ - Tol₁)), dann wird also der dritte Verfahrensschritt 615 ausgeführt. Im dritten Verfahrensschritt 615 wird von der Steuereinrichtung 25 ein Stromrichter-Ansteuersignal 630 zu dem modularen Multilevelstromrichter 9 gesendet. Mit diesem Stromrichter-Ansteuersignal 630 wird der Multilevelstromrichter 9 angewiesen, elektrische Energie aus dem Energiespeicher 273 zu entnehmen und diese elektrische Energie E₁ (mittels eines Wechselstroms (Einspeise-Wechselstroms) mit der Sollfrequenz fₛₒₗₗ) über den ersten Anschluss 12 in das Energieübertragungsnetz 3 einzuspeisen. Dadurch wird die Frequenz eines in dem Energieübertragungsnetz 3 fließenden Wechselstroms gestützt, d. h. die Frequenz des in dem Energieübertragungsnetz 3 fließenden Wechselstroms steigt an. Damit wird die Frequenz des Energieübertragungsnetzes 3 stabilisiert, d. h. einem ungewollten Absinken der Frequenz des Energieübertragungsnetzes 3 wird entgegengewirkt.

Wenn die ermittelte Frequenz f des Energieübertragungsnetzes 3 zu groß (Überfrequenz) ist (wenn also die ermittelte Frequenz f größer ist als der durch den Überschreitungs-Toleranzwert Tol₂ bestimmte Toleranzbereich um die Sollfrequenz fₛₒₗₗ, f > (fₛₒₗₗ + Tol₂)), dann wird der Verfahrensschritt 620 ausgeführt. Bei dem Verfahrensschritt 620 sendet die Steuereinrichtung 25 ein Schalteinrichtungs-Ansteuersignal 635 an die Schalteinrichtung 21. Mittels dieses Schalteinrichtungs-Ansteuersignals 635 wird die Schalteinrichtung 21 (zumindest zeitweise) geschlossen. Dadurch wird elektrische Energie E₂ aus dem Energieübertragungsnetz 3 über die Schalteinrichtung 21 zu der Widerstandseinheit 15 übertragen und dort in Wärme umgewandelt. Mit anderen Worten wird also elektrische Energie E₂ aus dem Energieübertragungsnetz 3 abgezogen. Dadurch sinkt die Frequenz des in dem Energieübertragungsnetz 3 übertragenen Wechselstroms; die Frequenz des Energieübertragungsnetzes 3 wird kleiner. Dadurch wird einer ungewollten zu hohen Frequenz des Energieübertragungsnetzes 3 entgegengewirkt.

Wenn die ermittelte Frequenz f des über das Energieübertragungsnetz 3 übertragenen Wechselstroms in einem erlaubten Toleranzbereich liegt (der durch den Unterschreitungs-Toleranzwert Tol₁ und den Überschreitungs-Toleranzwert Tol₂ um die Sollfrequenz fₛₒₗₗ herum gebildet ist), dann wird der Verfahrensschritt 625 durchgeführt. In diesem Verfahrensschritt 625 wird mittels eines entsprechenden Ansteuersignals der Multilevelstromrichter 9 angewiesen, keine elektrische Energie aus dem Energiespeicher 273 zu entnehmen und keine elektrische Energie in das Energieübertragungsnetz 3 einzuspeisen. Falls der Energiespeicher 273 nicht vollständig geladen ist, kann der Energiespeicher 273 i Verfahrensschritt 625 aus dem Energieübertragungsnetz 3 über den modularen Multilevelstromrichter 9 aufgeladen werden, so dass in dem Energiespeicher 273 die maximal mögliche Energiemenge gespeichert ist. Dadurch ist man für den nächstfolgenden Frequenzabfall vorbereitet. Außerdem bleibt während des fünften Verfahrensschritts 625 die Schalteinrichtung 21 geöffnet, so dass keine elektrische Energie vom Energieübertragungsnetz 3 zur Widerstandseinheit 15 übertragen wird. Der Unterschreitungs-Toleranzwert Tol₁ und/oder der Überschreitungs-Toleranzwert Tol₂ kann auch den Wert Null annehmen. Nach dem Verfahrensschritt 615, 620 bzw. 625 wird mit dem Verfahrensschritt 605 fortgefahren.

Die Verfahrensschritte lassen sich folgendermaßen zusammenfassen.
Verfahrensschritt 605: Die Frequenz f eines über das Energieübertragungsnetz übertragenen Wechselstroms wird ermittelt.
Verfahrensschritt 610: Die ermittelte Frequenz f wird mit der Sollfrequenz fₛₒₗₗ verglichen.
Verfahrensschritt 615: Mittels des Stromrichters wird Energie aus dem Energiespeicher entnommen und in das Energieübertragungsnetz eingespeist (bei f < (fₛₒₗₗ-Tol₁)).
Verfahrensschritt 620: Die Schalteinrichtung wird geschlossen und leitet Energie aus dem Energieübertragungsnetz zu der Widerstandseinheit; in der Widerstandseinheit wird diese Energie in Wärme umgewandelt (bei f > (fₛₒₗₗ+Tol₂)) .
Verfahrensschritt 625: Die im Energiespeicher gespeicherte Energie verbleibt im Energiespeicher; die Schalteinrichtung ist geöffnet (keine Aktion bei (fₛₒₗₗ-Tol₁)<=f <= (fₛₒₗₗ+Tol₂)) .

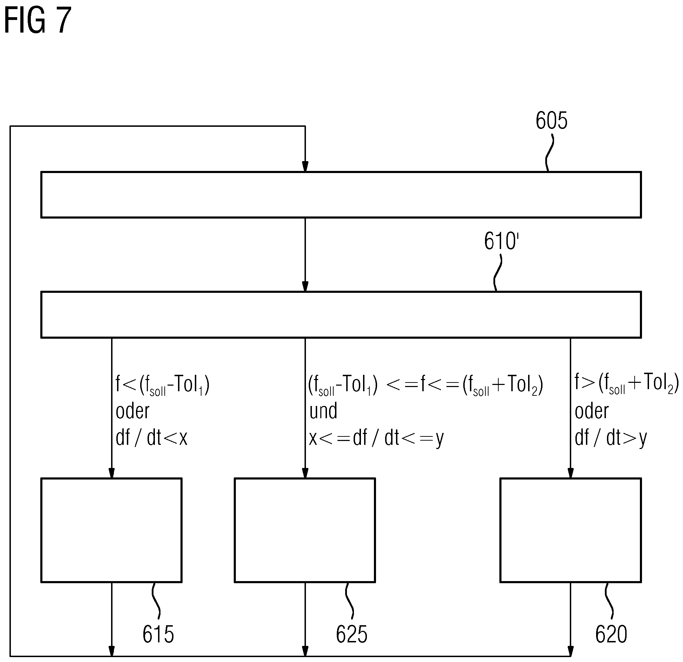

In Figur 7 ist ein weiterer beispielhafter Verfahrensablauf zur Frequenzstabilisierung des Energieübertragungsnetzes 3 dargestellt. Dieser Verfahrensablauf unterscheidet sich von dem in Figur 6 dargestellten Verfahrensablauf dadurch, dass alternativ oder zusätzlich zu einer Auswertung der Frequenz des über das Energieübertragungsnetz 3 übertragenen Wechselstroms die zeitliche Änderung dieser Frequenz ausgewertet wird.

Bei dem Verfahrensablauf gemäß Figur 7 wird beim Verfahrensschritt 610` die ermittelte Frequenz f mit der Sollfrequenz fₛₒₗₗ verglichen (wie bei dem Verfahrensablauf gemäß Figur 6) und/oder die zeitliche Änderung der Frequenz wird mit einem ersten Grenzwert x und mit einem zweiten Grenzwert y verglichen.

Bei dem Verfahrensablauf gemäß Figur 7 wird der Verfahrensschritt 615 auch dann ausgeführt, wenn die zeitliche Änderung der Frequenz des über das Energieübertragungsnetz 3 übertragenen Wechselstroms den ersten Grenzwert x unterschreitet (df/dt < x; Änderungsgeschwindigkeit der Frequenz ist kleiner als der erste Grenzwert x). Der erste Grenzwert x ist negativ (negativer erster Grenzwert x) und hat die Einheit Hz/s. Der Verfahrensschritt 620 wird auch dann ausgeführt, wenn die zeitliche Änderung der Frequenz des über das Energieübertragungsnetz 3 übertragenen Wechselstroms den zweiten Grenzwert y überschreitet (df/dt > y, Änderungsgeschwindigkeit der Frequenz ist größer als der zweite Grenzwert y). Der zweite Grenzwert y ist positiv (positiver erster Grenzwert y) und hat die Einheit Hz/s.

Der Verfahrensschritt 625 wird dann ausgeführt, wenn die zeitliche Änderung der Frequenz des über das Energieübertragungsnetz 3 übertragenen Wechselstroms zwischen dem ersten Grenzwert x und dem zweiten Grenzwert y liegt (x <= df/dt <= y) und wenn insbesondere zusätzlich gilt: (fₛₒₗₗ-Tol₁) <= f <= (fₛₒₗₗ+Tol₂). Die zeitliche Änderung der Frequenz (df/dt) wird auch als Rate of Change of Frequency (ROCOF) bezeichnet.

Bei der beschriebenen Anordnung und dem beschriebenen Verfahren ist besonders vorteilhaft, dass der Energiespeicher 273 ausschließlich dazu verwendet wird, im Fall eines ungewollten Frequenzabfalls Energie zur Einspeisung in das Energieübertragungsnetz bereitzustellen. Im Falle eines ungewollten Frequenzanstiegs im Energieübertragungsnetz wird dagegen der Energiespeicher 273 nicht benötigt, da in diesem Fall aus dem Energieübertragungsnetz elektrische Energie entnommen und mittels der Widerstandseinheit 15 in Wärme umgewandelt wird.

Theoretisch denkbar wäre auch eine Anordnung zur Frequenzstabilisierung eines Energieübertragungsnetzes mit lediglich einem Multilevelstromrichter 9 und einem Energiespeicher 273 (jedoch ohne die Widerstandseinheit 15 und die Schalteinrichtung 21). Bei dieser denkbaren Anordnung würde der Energiespeicher 273 sowohl im Falle einer ungewollten Frequenzunterschreitung als auch im Falle einer ungewollten Frequenzüberschreitung des Energieübertragungsnetzes als Pufferspeicher verwendet werden. Dies hätte zur Folge, dass der Energiespeicher 273 im Bereitschaftszustand nicht vollständig aufgeladen sein dürfte, sondern nur teilweise aufgeladen sein dürfte (beispielsweise nur zu 50 % aufgeladen; 50 % state of charge SOC). Dies wäre notwendig, damit der Energiespeicher jederzeit für Energieaufnahme bzw. Energieabgabe genutzt werden könnte (Energie- bzw. Leistungsaufnahme bei steigender Netzfrequenz, Energie- bzw. Leistungsabgabe bei fallender Netzfrequenz). Um eine bestimmte Energiemenge in dem Energiespeicher 273 für den Fall einer fallenden Netzfrequenz bereitzuhalten, müsste der Energiespeicher 273 also mit einer viel größeren Speicherkapazität ausgelegt sein, beispielsweise bei 50 % SOC mit der doppelten Speicherkapazität. Da Energiespeicher sehr teuer sind, wäre dies sehr kostenaufwendig.

Gegenüber dieser theoretisch denkbaren Anordnung zur Frequenzstabilisierung haben die Anordnung und das Verfahren gemäß den Figuren 1 bis 6 den Vorteil, dass der Energiespeicher 273 im Bereitschaftszustand auf seinen maximalen Energieinhalt aufgeladen sein kann. Damit kann im Falle einer ungewollten Frequenzabsenkung im Energieübertragungsnetz die Frequenz des Energieübertragungsnetzes 3 vergleichsweise lange gestützt werden oder es ist nur ein Energiespeicher geringerer elektrischer Kapazität notwendig.

Der Energiespeicher 273 wird also nur für die Frequenzstützung bei einem ungewollten Frequenzabfall verwendet. Daher kann der Energiespeicher vollständig aufgeladen werden (100 % SOC); es kann also die gesamte zur Verfügung stehende Speicherkapazität des Energiespeichers 273 zur Stützung der Netzfrequenz (vgl. Verfahrensschritt 615) verwendet werden. Dadurch ergibt sich ein bedeutender Kostenvorteil gegenüber der oben genannten theoretisch denkbaren Anordnung. Selbst wenn man berücksichtigt, dass die Widerstandseinheit 15 zusätzliche Kosten verursacht, ergibt sich insgesamt betrachtet eine beträchtliche Kosteneinsparung. Widerstandseinheiten also solche sind deutlich preisgünstiger zu realisieren als Energiespeichereinheiten.

Der modulare Multilevelstromrichter 9 kann zusätzlich auch die Funktion einer Blindleistungskompensationsanlage übernehmen. Der Multilevelstromrichter 9 dient im Ausführungsbeispiel zur Stabilisierung der Netzfrequenz (also dazu, die Abweichung der Netzfrequenz von der Sollfrequenz zu verringern). Die Stabilisierung bzw. Stützung der Netzfrequenz erfolgt dabei im Falle einer Netzunterfrequenz durch ein Einspeisen von Energie aus dem Energiespeicher 273 in das Netz und im Falle einer Netzüberfrequenz durch eine Entnahme von elektrischer Energie aus dem Netz und Umwandeln der entnommenen elektrischen Energie in Wärmeenergie (in der Widerstandseinheit 15). Mittels des Energiespeichers 273 können also kurzzeitig (insbesondere im Bereich von einigen Sekunden) große elektrische Energien / große elektrische Leistungen in das Netz eingespeist werden.

Durch die Zuschaltung der Widerstandseinheit 15 wird durch die Aufnahme und Umwandlung einer vergleichsweise großen Menge an elektrischer Energie / elektrischer Leistung die Überfrequenz des Energieübertragungsnetzes 3 begrenzt. Derartige Widerstandseinheiten 15 lassen sich relativ einfach und kostengünstig realisieren, weil diese im Wesentlichen aus den Widerstandselementen bestehen (es sind keine Stromrichter und keine Speicher dafür notwendig).

Der Energiespeicher 273 muss also lediglich für die Einspeisung von elektrischer Energie bzw. Leistung in das Energieübertragungsnetz 3 ausgelegt werden. Gegenüber der oben erwähnten theoretisch denkbaren Anordnung zur Frequenzstabilisierung mit 50 % SOC kann hier mit 100 % SOC die bereitgestellte elektrische Energie verdoppelt werden.

Die beschriebene Anordnung und das beschriebene Verfahren weisen eine Reihe von Vorteilen auf. Die Anordnung und das Verfahren können kostengünstig realisiert werden, weil der vergleichsweise teure Energiespeicher 273 zu 100 % zum Einspeisen von Energie in das Energieübertragungsnetz 3 ausgelegt werden kann. Dadurch kann (bei konstanter bereitgestellter Energiemenge) ein kleinerer Energiespeicher verwendet werden bzw. bei gleichbleibendem Energiespeicher eine größere Energiemenge bereitgestellt werden. Im ersten Fall wird für den Energiespeicher 273 weniger Platz benötigt, wodurch auch Gebäudekosten, Klimatisierungskosten, Grundstückskosten usw. reduziert werden. In diesem Fall wird auch eine deutlich kleinere Anzahl an Energiespeichereinheiten benötigt, so dass auch die Kosten für Wartung und Reparatur dieser Energiespeichereinheiten verringert werden. Durch die kleinere Anzahl der Energiespeichereinheiten verbessert sich außerdem die Verfügbarkeit der Anlage.

Durch die Kombination des modularen Multilevelstromrichters 9 (insbesondere in Form einer Blindleistungskompensationsanlage) mit dem Energiespeicher 273 und der Widerstandseinheit 15 wird eine einfache, kostengünstige, robuste und zuverlässige Lösung zur Begrenzung von Unterfrequenz und Überfrequenz in Energieübertragungsnetzen bereitgestellt. Die beschriebene Anordnung und das beschriebene Verfahren eignen sich insbesondere zum Einsatz im Hoch- und Höchstspannungsbereich, d. h. bei Hoch- und Höchstspannungsenergieübertragungsnetzen.

Bei entsprechend robuster Ausgestaltung der Widerstandseinheit 15 können auch hohe impulsweise Energieeinträge in die Widerstandseinheit 15 vorgenommen werden (durch entsprechende Ansteuerung der Schalteinrichtung 21). Die Schalteinrichtung 21 stellt dabei insbesondere einen Leistungsschalter dar, um bei Frequenzüberschreitungen die Widerstandseinheit 15 schnell auf das Energieübertragungsnetz 3 schalten zu können. Bei Bedarf kann die Widerstandseinheit 15 gekühlt werden, beispielsweise mit einer Flüssigkeits-Kühlanlage. Mittels schnellen Zu- und Abschaltens der Widerstandseinheit 15 an das Energieübertragungsnetz 3 lässt sich die Widerstandseinheit 15 auch für das sogenannte Power Oscillation Damping (POD) einsetzen.

Es wurden eine Anordnung und ein Verfahren beschrieben, mit denen auf eine kostengünstige Art und Weise die Frequenz eines Energieübertragungsnetzes stabilisiert werden kann.

## Patentansprüche

1. Anordnung (6) zur Frequenzstabilisierung eines Energieübertragungsnetzes (3)
- mit einem modularen Multilevelstromrichter (9), der einen ersten Anschluss (12) zum elektrischen Verbinden mit einem Energieübertragungsnetz (3) aufweist, und der mit einem Energiespeicher (273) verbunden ist,
- mit einer elektrischen Widerstandseinheit (15), die einen zweiten Anschluss (18) zum elektrischen Verbinden mit dem Energieübertragungsnetz (3) aufweist, wobei die Widerstandseinheit (15) mit einer Schalteinrichtung (21) verbunden ist, die ein schaltbares elektrisches Verbinden der Widerstandseinheit (15) mit dem Energieübertragungsnetz (3) ermöglicht, und
- einer Steuereinrichtung (25), die den Multilevelstromrichter (9) und die Schalteinrichtung (21) so ansteuert, dass
- wenn die zeitliche Änderung der Frequenz des über das Energieübertragungsnetz (3) übertragenen Wechselstroms einen ersten Grenzwert (x) unterschreitet, der Multilevelstromrichter (9) elektrische Energie aus dem Energiespeicher (273) entnimmt und in das Energieübertragungsnetz (3) einspeist (615), und
- wenn die zeitliche Änderung der Frequenz des über das Energieübertragungsnetz (3) übertragenen Wechselstroms einen zweiten Grenzwert (y) überschreitet, die Schalteinrichtung (21) schließt und dadurch elektrische Energie von dem Energieübertragungsnetz (3) zu der Widerstandseinheit (15) überträgt, woraufhin die Widerstandseinheit (15) diese elektrische Energie in Wärme umwandelt (620).

2. Anordnung nach Anspruch 1,
**dadurch gekennzeichnet, dass**
- der Multilevelstromrichter (9) eine Mehrzahl von Modulen (1_1 ... 6_n) aufweist, die jeweils mindestens zwei elektronische Schaltelemente (302, 306) und einen elektrischen Kondensator (310) aufweisen.

3. Anordnung nach Anspruch 2,
**dadurch gekennzeichnet, dass**
- die zwei elektronischen Schaltelemente (302, 306) der Module in einer Halbbrückenschaltung angeordnet sind, oder
- die Module jeweils die zwei elektronischen Schaltelemente (302, 306) und zwei weitere elektronische Schaltelemente (402, 406) aufweisen, wobei die zwei elektronischen Schaltelemente (302, 306) und die zwei weiteren elektronischen Schaltelemente (402, 406) in einer Vollbrückenschaltung angeordnet sind.

4. Anordnung nach einem der vorhergehenden Ansprüche,
**dadurch gekennzeichnet, dass**
- der Energiespeicher (273) eine Mehrzahl von miteinander verbundenen Energiespeichereinheiten (503) aufweist.

5. Anordnung nach Anspruch 4,
**dadurch gekennzeichnet, dass**
- die Energiespeichereinheiten (503) Kondensatoren und/oder Batterien sind.

6. Verfahren zur Frequenzstabilisierung eines Energieübertragungsnetzes (3), wobei das Energieübertragungsnetz (3) mit einem modularen Multilevelstromrichter (9) verbunden ist, der mit einem Energiespeicher (273) verbunden ist, und wobei das Energieübertragungsnetz (3) über eine Schalteinrichtung (21) mit einer elektrischen Widerstandseinheit (15) verbunden ist, wobei bei dem Verfahren
- die Frequenz eines über das Energieübertragungsnetz (3) übertragenen Wechselstroms ermittelt wird (605),
- wenn die zeitliche Änderung der Frequenz einen ersten Grenzwert (x) unterschreitet, von dem Multilevelstromrichter (9) elektrische Energie aus einem Energiespeicher (273) entnommen und in das Energieübertragungsnetz (3) eingespeist wird (615), und
- wenn die zeitliche Änderung der Frequenz einen zweiten Grenzwert (y) überschreitet, die Schalteinrichtung (21) geschlossen wird, wodurch elektrische Energie von dem Energieübertragungsnetz (3) zu der Widerstandseinheit (15) übertragen und dort in Wärme umgewandelt wird (620).

## Claims

1. Arrangement (6) for frequency stabilization of a power transmission grid (3)
- with a modular multi-level converter (9) that comprises a first terminal (12) for electrical connection to a power transmission grid (3), and that is connected to an energy store (273),
- with an electrical resistor unit (15) that comprises a second terminal (18) for electrical connection to the power transmission grid (3), wherein the resistor unit (15) is connected to a switching device (21) that enables a switchable electrical connection of the resistor unit (15) to the power transmission grid (3), and
- a control device (25) that operates the multi-level converter (9) and the switching device (21) in such a way that
- when the change over time of the frequency of the alternating current transmitted over the power transmission grid (3) falls below a first threshold value (x), the multi-level converter (9) draws electrical energy out of the energy store (273) and feeds (615) it into the power transmission grid (3) and
- when the change over time of the frequency of the alternating current transmitted via the power transmission grid (3) exceeds a second threshold value (y), the switching device (21) closes and thereby transmits electrical energy from the power transmission grid (3) to the resistor unit (15), whereupon the resistor unit (15) converts (620) this electrical energy into heat.

2. Arrangement according to Claim 1,
**characterized in that**
- the multi-level converter (9) comprises a plurality of modules (1_1 ... 6_n), each of which comprises at least two electronic switching elements (302, 306) and an electrical capacitor (310).

3. Arrangement according to Claim 2,
**characterized in that**
- the two electronic switching elements (302, 306) of the modules are arranged in a half-bridge circuit, or
- the modules each comprise the two electronic switching elements (302, 306) and two further electronic switching elements (402, 406), wherein the two electronic switching elements (302, 306) and the two further electronic switching elements (402, 406) are arranged in a full-bridge circuit.

4. Arrangement according to one of the preceding claims,
**characterized in that**
- the energy store (273) comprises a plurality of mutually interconnected energy storage units (503).

5. Arrangement according to Claim 4,
**characterized in that**
- the energy storage units (503) are capacitors and/or batteries.

6. Method for frequency stabilization of a power transmission grid (3), wherein the power transmission grid (3) is connected to a modular multi-level converter (9) which is connected to an energy store (273), and wherein the power transmission grid (3) is connected via a switching device (21) to an electrical resistor unit (15), wherein, in the method
- the frequency of an alternating current transmitted over the power transmission grid (3) is ascertained (605),
- when the change over time of the frequency falls below a first threshold value (x), electrical energy is drawn out of an energy store (273) by the multi-level converter (9) and fed (615) into the power transmission grid (3), and
- when the change over time of the frequency exceeds a second threshold value (y), the switching device (21) is closed, whereby electrical energy is transmitted from the power transmission grid (3) to the resistor unit (15) and converted (620) there into heat.

## Revendications

1. Système (6) de stabilisation de la fréquence d'un réseau (3) de transport d'énergie
- comprenant un convertisseur (9) modulaire à plusieurs niveaux, qui a une première borne (12) de connexion électrique à un réseau (3) de transport d'énergie et qui est connecté à un accumulateur (273) d'énergie,
- comprenant une unité (15) de résistance électrique, qui a une deuxième borne (18) de connexion électrique au réseau (3) de transport d'énergie, dans lequel l'unité (15) de résistance est connectée à un dispositif (21) de coupure, qui rend possible une connexion électrique pouvant être interrompue de l'unité (15) de résistance au réseau (3) de transport d'énergie, et
- un dispositif (25) de commande, qui commande le convertisseur (9) à plusieurs niveaux et le dispositif (21) de coupure de manière à ce que
- si la variation en fonction du temps de la fréquence du courant alternatif transporté par le réseau (3) de transport d'énergie devient inférieure à une première valeur (x) limite, le convertisseur (9) à plusieurs niveaux prélève de l'énergie électrique de l'accumulateur (273) d'énergie et l'injecte (615) dans le réseau (6) de transport d'énergie, et
- si la variation en fonction du temps de la fréquence du courant alternatif transporté par le réseau (3) de transmission d'énergie dépasse une deuxième valeur (y) limite, le dispositif (21) de coupure se ferme et ainsi transporte de l'énergie électrique du réseau (3) de transport d'énergie à l'unité (15) de résistance, après quoi l'unité (15) de résistance transforme (620) cette énergie électrique en chaleur.

2. Système suivant la revendication 1,
**caractérisé en ce que**
- le convertisseur (9) à plusieurs niveaux a une pluralité de modules (1_1 ... 6_n), qui ont chacun au moins deux éléments (302, 306) électroniques de coupure et un condensateur (310) électrique.

3. Système suivant la revendication 2,
**caractérisé en ce que**
- les deux éléments (302, 306) électroniques de coupure des modules sont montés suivant un circuit en demi pont, ou
- les modules ont chacun les deux éléments (302, 306) électroniques de coupure et deux autres éléments (402, 406) électroniques de coupure, les deux éléments (302, 306) électroniques de coupure et les deux autres éléments (402, 406) électroniques de coupure étant montés suivant un circuit en pont complet.

4. Système suivant l'une des revendications précédentes,
**caractérisé en ce que**
- l'accumulateur (273) d'énergie a une pluralité d'unités (503) d'accumulateur d'énergie connectées entre elles.

5. Système suivant la revendication 4,
**caractérisé en ce que**
- les unités (503) d'accumulateur d'énergie sont des condensateurs et/ou des batteries.

6. Procédé de stabilisation de la fréquence d'un réseau (3) de transport d'énergie, dans lequel
le réseau (3) de transport d'énergie est connecté à un convertisseur (9) modulaire à plusieurs niveaux, qui est connecté à un accumulateur (273) d'énergie, et dans lequel le réseau (3) de transport d'énergie est connecté à une unité (15) de résistance électrique par un dispositif (21) de coupure, dans lequel dans le procédé
- on détermine (605) la fréquence d'un courant alternatif transporté par le réseau (3) de transport d'énergie,
- si la variation en fonction du temps de la fréquence est inférieure à une première valeur (x) limite, on prélève par le convertisseur (9) à plusieurs niveaux de l'énergie électrique dans l'accumulateur (273) d'énergie et on l'injecte (615) dans le réseau (3) de transport d'énergie, et
- si les variations en fonction du temps de la fréquence dépassent une deuxième valeur (y) limite, on ferme le dispositif (21) de coupure, grâce à quoi de l'énergie électrique est transportée du réseau (3) de transport d'énergie à l'unité (15) de résistance et y est transformée (620) en chaleur.
